# EUROPEAN PATENT APPLICATION

(11) **EP 2 723 052 A2**
(43) Date of publication of application: **23.04.2014**
(21) Application number: 13188344.9
(22) Date of filing: 11.10.2013
(51) Int. Cl.: H04M 3/436, H04M 7/00

(54) **System and method for in-context collaboration**

(30) Priority: 16.10.2012 US 201213653045
(71) Applicant: Mitel Networks Corporation, Ottawa, ON K2K 2W7 (CA)
(72) Inventor: Trinh, Trung, Nepean, Ontario K2G 0Z5 (CA); Michaud, Alain, Kanata, Ontario K2W 1B3 (CA)
(74) Representative: Charlton, Steven

(57) **Abstract**

A communication system for communication sessions, such as voice calls, conference calls, and instant messaging chat sessions, includes a plurality of communication devices and one or more servers configured to provide data communication among the plurality of communication devices. Data contexts having chronological user-generated content are established and maintained between different communication devices. An indication of current user-generated content of a data context is sent from a calling/initiating party to one or more receiving parties when a communication session is initiated. The indication of current user-generated content can then be used by the one or more receiving parties to determine whether the communication session is to be accepted and, if accepted, to quickly become familiar with the subject of the communication session.

## Description

### Field of Invention

The present invention relates generally to communication systems. More particularly, the present invention relates to a system and method for providing in-context collaboration for call, conference, or chat session creation and handling in communication systems.

### Background

It is helpful to provide call context to a called party prior to the called party accepting the call. Calling Line ID (CLID) and screen-pop tools for customer relationship management (CRM) systems are known in the art for providing a called party with call context. Systems are also known in the art for a caller to record or type a message prior to call initiation in order to convey an explicit call purpose to the called party. In another approach to providing call context, a caller completes a call to the called party and advises the called party to follow certain instructions to obtain relevant call context information, such as via a URL link.

Alternatively, the caller can verbally describe the purpose and context of the call to the called party. The caller can also send an email with call context information and then request the recipient to call back.

In the foregoing approaches to providing call context to a called party, the call context often lacks descriptive detail and/or user intervention is required.

### Brief Description of the Drawings

Features and advantages of the invention will be apparent from the detailed description which follows, taken in conjunction with the accompanying drawings, wherein:
FIG. 1 diagram of a communication system for contextual voice communication in accordance with an embodiment of the present invention;
FIG. 2 is a functional block diagram of a data server in accordance with an embodiment of the present invention;
FIG. 3 is a functional block diagram of a call-control server in accordance with an embodiment of the present invention;
FIG. 4 is a functional block diagram of a communication device in accordance with an embodiment of the present invention;
FIG. 5 illustrates a method of contextual voice communication in accordance with an embodiment of the present invention;
FIG. 6 is a diagram showing a user interface in accordance with an embodiment of the present invention; and
FIG. 7 is a schematic diagram of a data structure in accordance with an embodiment of the present invention.

Reference will now be made to the exemplary embodiments illustrated, and specific language will be used herein to describe the same. It will nevertheless be understood that no limitation of the scope of the invention is thereby intended.

### Detailed Description

Before aspects of the present invention are disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular exemplary embodiments only and is not intended to be limiting.

It should be understood that many of the functions described in this specification have been described as embodied in programs stored in memory and executable by processors. Programs may indeed be implemented in software for execution by various types of processors. An identified program of executable code may, for instance, comprise one or more physical or logical blocks of computer instructions, which may, for instance, be organized as an object, procedure, or function. Nevertheless, the executables of an identified program need not be physically located together, but may comprise disparate instructions stored in different locations which, when joined logically together, comprise the program and achieve the stated purpose for the program.

A program may also be implemented as a hardware circuit comprising custom VLSI circuits or gate arrays, off-the-shelf semiconductors such as logic chips, transistors, or other discrete components. A program may also be implemented in programmable hardware devices such as field programmable gate arrays, programmable array logic, programmable logic devices or the like.

Indeed, a program of executable code may be a single instruction, or many instructions, and may even be distributed over several different code segments, among different programs, and across several memory devices. Similarly, operational data may be identified and illustrated herein within programs, and may be embodied in any suitable form and organized within any suitable type of data structure. The operational data may be collected as a single data set, or may be distributed over different locations including over different storage devices, and may exist, at least partially, merely as electronic signals on a system or network. The programs may be passive or active, including agents operable to perform desired functions.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

Furthermore, the described features, structures, or characteristics may be combined in any suitable manner in one or more embodiments. In the following description, numerous specific details are provided, such as examples of materials, fasteners, sizes, lengths, widths, shapes, etc.. One skilled in the relevant art will recognize, however, that embodiments of the invention can be practiced without one or more of the specific details, or with other methods, components, materials, etc. In other instances, well-known structures, materials, or operations are not shown or described in detail to avoid obscuring aspects of the invention.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, the term "about" is used to provide flexibility to a numerical range endpoint by providing that a given value may be "a little above" or "a little below" the endpoint.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Aspects of the present invention relate to a system and method for providing in-context collaboration for call, conference, or chat session creation and handling in communication systems that address at least some of the disadvantages in the prior art. Voice calls, conference calls, and chat sessions can be generally referred to as communications sessions.

Aspects of the invention concern a system and method for seamlessly sharing of data context between two or more parties as part of voice call establishment. The method comprises the call activation capability within working content and the facilitation for sharing that content, or information about that content, to a called party. The shared data context can be, but is not limited to, multimedia-based information, email, a document, a spreadsheet, a presentation, a chat session, a calendar event, and the like. The data context can be shared over one-to-one (e.g., a two-party call) and one-to-many connections (e.g., a conference call).

Aspects of the invention also provide an aggregated view of a data context and conversation regardless of the information type or medium for the purpose of tracking, archiving, or for making communication more effective.

Aspects of the invention provide a better and detailed context regarding the call topic to the party or parties receiving the call. A caller placing a phone call can allow or enable context visibility to the receiving party or parties with few, if any, additional steps beyond those required to place the call.

The disclosure below is set out with reference to voice calls, but other aspects of the invention also apply to instant messaging chats on systems that are analogous to voice calls.

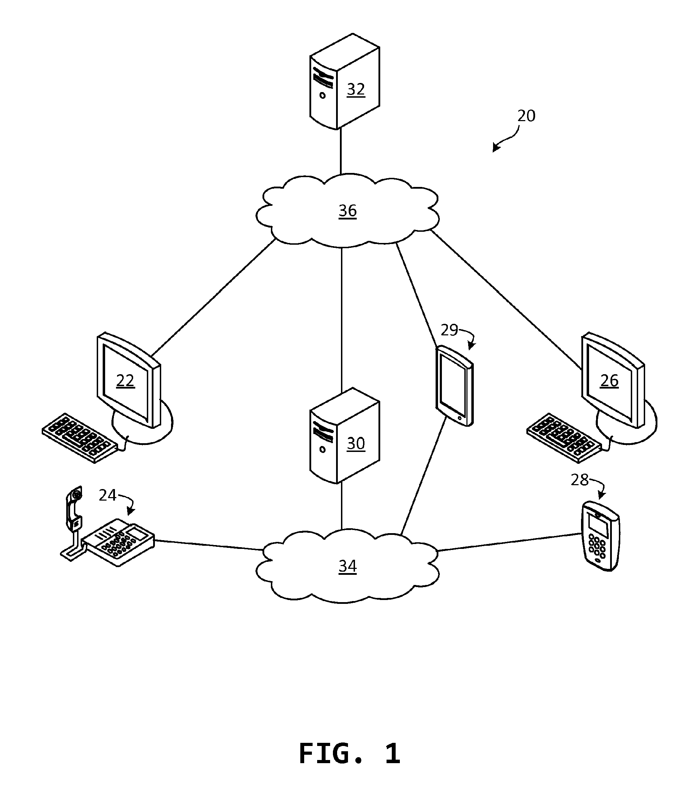

Fig. 1 illustrates a communication system 20 for contextual voice communication according to an embodiment of the present invention.

The system 20 includes a plurality of communication devices 22, 24, 26, 28, 29 and one or more servers 30, 32. In this exemplary embodiment, two servers are described for explanatory purposes. In other embodiments however, groups of servers dedicated to different functions can be used. In still other embodiments, a single server can be used.

The servers 30, 32 and communication devices 22 - 29 are in mutual communicative connection over one or more networks 34, 36. In this exemplary embodiment, two networks are illustrated. The networks 34, 36 can be distinct networks or can be the same network. The networks 34, 36 are illustrated as separate and distinct for clarity of explanation. The networks 34, 36 are representative of one or more of a local-area network, a wide-area network, an intranet, the Internet, a telephony network, or any combination of such, and the like. The networks 34, 36 can be configured to allow one or both of wired and wireless communication among the servers 30, 32 and communication devices 22 - 29.

In this exemplary embodiment, the one or more servers 30 include a data server and the one or more servers 32 include a call-control server.

The data server 32 provides for data communication among the plurality of communication devices 22 - 29 configured for data service. In this example, the communication devices 22, 26, 29 are so configured. Such data communication provides for establishment and maintenance of data contexts between different communication devices. The data contexts provide for storage of chronological user-generated content.

Examples of such data services include messaging services (e.g., email, instant messaging, among other messaging platforms), document sharing services (e.g., Google Docs™), calendaring services or task services (e.g., Microsoft Outlook™), voicemail or voice-message services, call recording services, other services described herein, and similar networked services. Chronological user-generated content can therefore include one or more of a messaging thread, a versioned document, a calendar event/meeting, a task, a voice/call recording, missed/ignored/rejected call indications, and like content that can be added to or updated by one or more users.

The user-generated content can include other kinds of visual or audio content, particularly content that is used during a collaborative project or task, such as messaging communications about a subject, co-editing a document, planning a meeting, and the like.

Different data servers 32 can be provided for disparate content services that can all contribute to the data context. That is, a data context can be a multimedia context that includes an email thread, a voicemail message, missed call indications, ignored/rejected call indications, a recording of a previous telephone call, a calendar event, and so on. Such a data context can provide a large-scale chronological picture of a collaborative project. Further, as will be discussed below, such a data context can be added to and used with call initiation to increase communications effectiveness.

The communication devices 22 - 29 may be voice communication devices and data communication devices. Some of the communication devices 22 - 29 may be configured mainly or exclusively for voice communication. Examples, of such include Internet protocol (IP) telephones. Some of the communication devices 22 - 29 may be configured mainly or exclusively for data communications. Examples of such include desktop computers and the like. Further, some of the communication devices 22 - 29 may be configured for both voice and data communications. Examples of such include smart phones, tablet computers, and the like. The preceding examples are not limiting and, for example, a desktop computer may be configured for voice and data communications. Further, when a communication device 22 - 29 is capable, a user of the communication device may configure the communication device for voice, data, or voice and data communication based on personal preference by, for example, installing software.

Different communication devices with different capabilities can be used by different users for different purposes. In the example system 20 illustrated, the communication device 22 is a desktop computer and communication device 24 is a desktop IP phone. The computer 22 and phone 24 are used by a user, such as an employee of a company.

Further, the communication device 26 is a desktop computer and communication device 28 is a mobile phone, with the computer 26 and mobile phone 28 are used by another user, such as another employee of a company. In addition, the communication device 29 is a voice- and data-capable tablet computer that is used by yet another user, such as another employee of the company. Accordingly, the desktop computers 22, 26 and tablet computer 29 communicate data via the network 36 and the phones 24, 28 and tablet computer 29 are capable of voice communication via the call-control server 30 and the network 34. This is but one illustrative example, and it should be apparent that a multitude of other examples are possible. In the below description, each user is considered to have access to one or more communication devices that provide for voice and data communication, however physically realized.

The call-control server 30 is configured to control voice telephony communication among the plurality of communication devices 22 - 29 enabled for voice communication, and, in this example, specifically the phones 24, 28 and the tablet computer 29.

As will be discussed further below, the call-control server 30 is further configured to send an indication of current user-generated content of a data context associated with a receiving party and a calling party to a communication device associated with the receiving party. The call-control server 30 is configured to send this indication in response to an initiation of a call at a communication device associated with the calling party. The data communication device 22, 26, 29 of the receiving party is configured to output the current user-generated content indicated by the indication. That is, when a user calls another user via one of the voice communications devices 24, 28, 29, the call-control server 30 sends an indication of current user-generated content (e.g., a latest email message of a thread) from the data communication device 22, 26, 29 of the calling party to the data communication device 22, 26, 29 of the receiving party. The indication can be presented in a notification that does not take focus. Notifications that do not take focus from applications currently in focus, such as a background notification or a notification in a new window, are advantageous because the receiving party is less disturbed or interrupted. Alternatively, the indication can be presented in a notification that does take focus from the current application. This can advantageously allow the called party to be quickly and simply provided with the context of the call (i.e., the latest message in the thread), so that communication between the parties becomes more efficient. It can also facilitate co-editing of a document, by automatically bringing the document into focus for a called party.

The sent indication of current user-generated content of the data context can be a reference identifier (e.g., email message ID) of the current user-generated content stored on the data server 32. Alternatively, the sent indication of current user-generated content can be the content itself or a portion thereof. That is, the receiving party's data communication device may be provided with all the content necessary to allow the receiving party to accept/reject the call, or the receiving party's data communication device may need to fetch such data from the server 32 using an identifier.

The call-control server 30 can be configured to send the indication of current user-generated content directly in response to initiation of the call without further action by the calling party. That is, when the calling party takes an action to place the call (e.g., pressing a call button or the like), the call-control server 30 can send the indication of current user-generated content as part of establishing the call.

A call initiated by the call-control server 30 can be a conference call that has a plurality of receiving parties that each receives the indication of the user-generated content in response to initiation of the call. This can advantageously allow all parties in a conference call to be informed of the purpose of the call.

Initiation of a call by a calling party can be performed using the content that is to be the subject of the call.

If the example of an email thread, call initiation can be by way of a button or other user-interface element associated with a particular email message. The party receiving the call is then automatically selected to be one or more of the recipients or sender of the email message. This example will be described in greater detail below.

In the example of a document, the caller can initiate a call from a highlighted portion of the document, such as a selected portion of text. If the document has an author or previous editor associated with it, the party receiving the call is then automatically selected to be the author or previous editor. If not, the calling party can be prompted for a receiving party. The indication of content sent during call establishment can be the name of the document and/or all or some of the selected portion of text.

In the example of a collaborative calendar booking, call initiation can be by way of a button or other user-interface element associated with a calendar event being edited. The receiving party or parties of the call can include a participant or to a subset or all participants. The indication of content sent during call establishment can be the subject of the calendar event.

Other examples of content used for establishing a call are described herein.

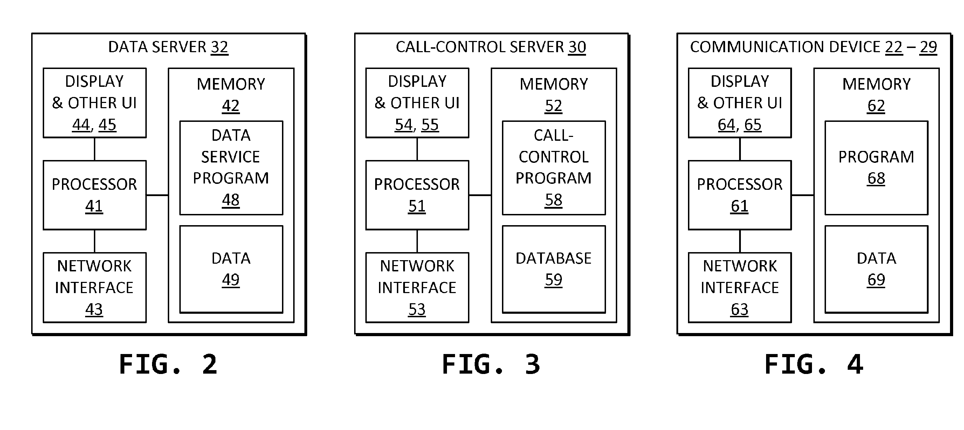

FIG. 2 shows an example computer that can be used as any of the data or host servers 32 described herein. The data server 32 can include a processor 41, memory 42, a network interface 43, and can further include a display 44 and other user interface components 45. The processor 41, memory 42, network interface 43, and display 44 and other user interface 45 are electrically interconnected and can be physically contained within a housing or frame. The data server 32 may be a computer such as a rack-mount server, blade server, tower server, or another kind of computer, or a process or program running on such a computer.

The processor 41 is configured to execute instructions, which may originate from the memory 42 or the network interface 43. The processor 41 may be known a central processing unit (CPU). The processor 41 can include one or more sub-processors or processing cores.

The memory 42 includes a non-transitory computer-readable medium that is configured to store programs and data. The memory 42 can include one or more short-term or long-term storage devices, such as a solid-state memory chip (e.g., DRAM, ROM, non-volatile flash memory), a hard drive, an optical storage disc, and similar. The memory 42 can include fixed components that are not physically removable from the server (e.g., fixed hard drives) as well as removable components (e.g., removable memory cards). The memory 42 allows for random access, in that programs and data may be both read and written.

The network interface 43 is configured to allow the server to communicate with other devices across a network, such as the network 36. The network interface 43 can include one or more of a wired and wireless network adaptor and well as a software or firmware driver for controlling such adaptor.

The display 44 and other user interface components 45, if provided, can include a display device, such as a monitor, a bank of light-emitting diodes (LEDs), or similar for monitoring operations of the server. The user interface 45 can include an input device, such as a keyboard, mouse, touch-sensitive element of a touch-screen display, or similar device. The user interface 45 can be remote to the server and provided via the network interface 43 to a client computer operated by a remote administrator.

One or more data service programs 48 can be provided to the server 32 to carry out the processes described herein. Such program 48 may reference data 49 in the form of databases, files, or other data structures. Examples of such a program 48 include an email or messaging server, a document server, a calendaring or task server, a gadget server, and the like.

FIG. 3 shows an example computer that can be used as call-control server 30. The call-control server 30 can include a processor 51, memory 52, a network interface 53, and can further include a display 54 and other user interface components 55. The processor 51, memory 52, network interface 53, and display 54 and other user interface 55 are electrically interconnected and can be physically contained within a housing or frame. The call-control server 30 may be a computer such as a rack-mount server, blade server, tower server, or another kind of computer, or a process or program running on such a computer.

The processor 51 is configured to execute instructions, which may originate from the memory 52 or the network interface 53. The processor 51 may be known as a CPU. The processor 51 can include one or more sub-processors or processing cores.

The memory 52 includes a non-transitory computer-readable medium that is configured to store programs and data. The memory 52 can include one or more short-term or long-term storage devices, such as a solid-state memory chip (e.g., DRAM, ROM, non-volatile flash memory), a hard drive, an optical storage disc, and similar. The memory 52 can include fixed components that are not physically removable from the server (e.g., fixed hard drives) as well as removable components (e.g., removable memory cards). The memory 52 allows for random access, in that programs and data may be both read and written.

The network interface 53 is configured to allow the server to communicate with other devices across a network, such as the network 34, 36. The network interface 53 can include one or more of a wired and wireless network adaptor and well as a software or firmware driver for controlling such adaptor.

The display 54 and other user interface components 55, if provided, can include a display device, such as a monitor, a bank of LEDs, or similar for monitoring operations of the server. The user interface 55 can include an input device, such as a keyboard, mouse, touch-sensitive element of a touch-screen display, or similar device. The user interface 55 can be remote to the server and provided via the network interface 53 to a client computer operated by a remote administrator.

One or more call-control programs 58 can be provided to the call-control server 30 to carry out the processes described herein. Such program 58 may reference data 59 in the form of databases, files, or other data structures. The call-control program 58 can be configured to establish calls over session initiation protocol (SIP), MiNET™, or other protocol, and can further be configured to communicate data via a WebSocket or similar protocol. The database 59 can be configured to store information pertaining users of the call-control server 30, such as user identifications (user IDs), phone numbers, email addresses, and the like. The database 59 can further be configured to store interrelations of information about each user, so that each user has multiple points of contact via different pathways (e.g., a VOIP number, a desk phone number, an email address, and a mobile phone number). A user's pathways can be prioritized by user selection or by automatic user presence detection. Further, the call-control server 30 can include a unified communications (UC) server (e.g., Mitel® Applications Suite - MAS) and private branch exchange (PBX) database.

FIG. 4 shows an example communication device that can be representative of any of the communication device 22 - 29. The communication device includes a processor 61, memory 62, a network interface 63, and a display 64 and other user interface components 65. The processor 61, memory 62, network interface 63, and display 64 and user interface 65 are electrically interconnected and can be physically contained within a housing or frame. The communication devices 22 - 29 may each be a communication device such as a desktop computer, notebook computer, tablet computer, mobile phone, smart phone, desk phone, netbook, and the like.

The processor 61 is configured to execute instructions, which may originate from the memory 62 or the network interface 63. The processor 61 may be known a CPU. The processor 61 can include one or more sub-processors or processing cores.

The memory 62 includes a non-transitory communication device-readable medium that is configured to store programs and data. The memory 62 can include one or more short-term or long-term storage devices, such as a solid-state memory chip (e.g., DRAM, ROM, non-volatile flash memory), a hard drive, an optical storage disc, and similar. The memory 62 can include fixed components that are not physically removable from the communication device (e.g., fixed hard drives) as well as removable components (e.g., removable memory cards). The memory 62 allows for random access, in that programs and data may be both read and written.

The network interface 63 is configured to allow the communication device 14, 16 to communicate with other communication devices across a network, such as the network 34, 36. The network interface 63 can include one or more of a wired and wireless network adaptor and well as a software or firmware driver for controlling such adaptor.

The display 64 and other user interface components 65 can include a display device, such as a monitor or liquid-crystal display (LCD) display, and an input device, such as a keyboard, keypad, mouse, touch-sensitive element of a touch-screen display, or similar device.

For data-enabled communication devices, one or more programs 68 may be provided in the memory 62 to interface with the data server 32. Such a program 68 may be referred to as a data service client and can include a web browser, email client, calendar or task client, or other user agent suitable for the type of content being accessed.

For voice-enabled communication devices, the one or more programs 68 may include a telephony program, such as a VOIP client, a wireless network call application, or the like.

Voice- and data-enabled communication devices may have both kinds of programs 68. Any of the programs may reference locally stored data 69.

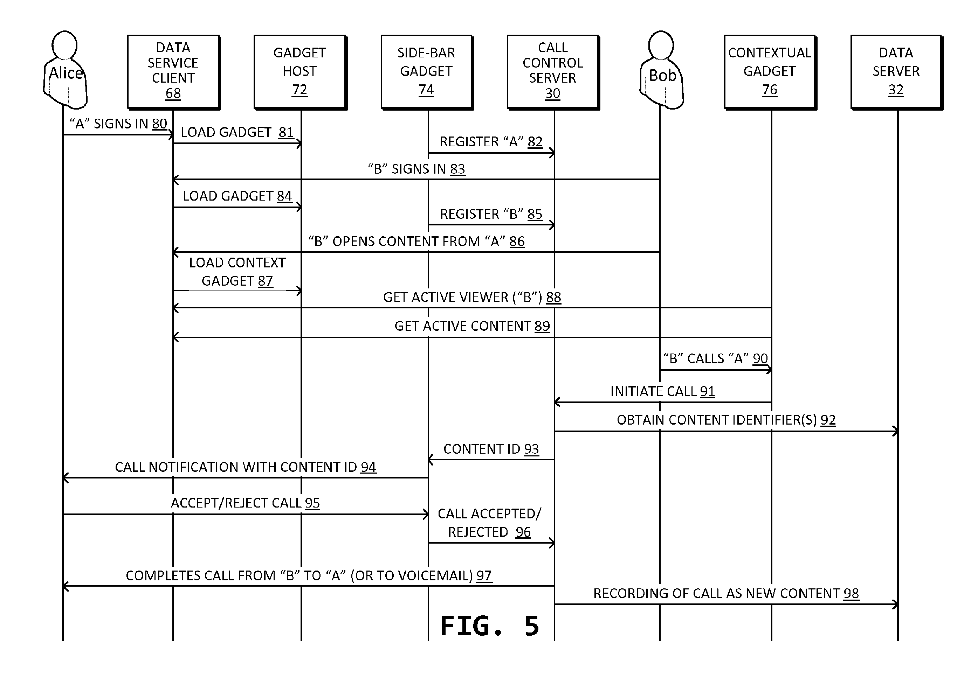

FIG. 5 illustrates a method for establishing a contextual voice call between two users Alice ("A") and Bob ("B") using the system 20 of FIG. 1. In this example, Alice is using the communications devices 22, 24 and Bob is using the communications devices 26, 28 (FIG. 1), though any of the communications devices described herein can be used by any of the users. Also in this example, email messaging is referenced for explanatory purposes. Other kinds of data services, such as those described elsewhere herein, are equally suitable. Further, in this example, software gadgets are referenced, but it should be understood that any similarly capable embedded software application, module of a larger application, or other entity can be employed.

At 80, Alice signs in to the data service client 68 on her desktop computer 22 by, for example, entering her username and password. During the sign-in process, at 81, the computer 22 contacts a gadget host 72. The gadget host 72 may be part of the service provided by the data server 32 or may be a separate and distinct host (e.g., another server 32 of FIG. 2).

At 82, a side-bar gadget 74 provided by the gadget host 72 is loaded and registers Alice with the call-control server 30. Thus, the call-control server 30 is notified that Alice has signed in to the data service provided by the data server 32. The call-control server 30 can store information is association with Alice's user ID to indicate such.

In the example of email, at 80 - 82, Alice signs in to a web-based email service (such as Gmail™, which supports gadgets, such as side-bar gadgets and contextual gadgets) and a side-bar gadget previously selected by Alice, or by someone on her behalf, is loaded and informs the call-control server 30 that Alice is checking her email.

At 83 - 85 the same process is performed for Bob who is also signing in to the data service client 68 on his computer 26. Thus, in the example of email, both Alice and Bob are signed in to their respective email accounts.

Next, at 86, Bob opens or otherwise selects content that has been received from Alice. This could be, for example, Bob opening an email thread containing a message from

Alice. This triggers, at 87, the data service client 68 to load a contextual gadget 76 for Bob from the gadget host 72.

The contextual gadget 76 is configured to identify the active viewer (e.g., Bob), at 88, and further obtain the active content (e.g., the email message from Alice), at 89. To achieve this, the contextual gadget 76 can be programmed to access variables, such as user ID and local message ID, exposed via the data service client 68.

Then, at 90, Bob uses the contextual gadget 76 to initiate a call to Alice by pressing a call button provided by the gadget or by performing a similar action, as will be discussed in more detail below.

The contextual gadget 76 initiates the call, at 91, with the call-control server 30 with reference to the identity of the calling party (e.g., the user ID of Bob). For example, the contextual gadget 76 can send to the call-control server 30 the identification of the active user (e.g., user ID or email address of Bob) who is the calling party, an identification of the receiving party (e.g., user ID or email address of Alice) which can be obtained from the content, indication of the content (e.g., local message ID), which may include portions of the content itself. A command to initiate the call may also be sent from the contextual gadget 76 to the call-control server 30, at 91, though such command may be omitted if it is inherent from the nature or existence of the information sent at 91.

In response, at 92, the call-control server 30 queries the data server 32 referencing the identity of the active user (e.g., the user ID or email address of Bob) and indication of the active content (e.g., local message ID). The process at 92 may include user and content identification resolution that requires several back-and-forth communications between the call-control server 30 and the data server 32. In the example of web-based email, the call-control server 30 uses the local message ID of the message that Bob selected to obtain a server message ID for the same message. The server message ID is then used to obtain the server message ID for the same message as assigned to Alice. The server message ID for Alice is then used to obtain the local message ID for Alice. Ultimately, the call-control server 30 obtains an indication of the content and, if not already known, an identification of the party that is to receive the call. In a data service that uses absolute content IDs, back-and-forth communications, such as the above, may not be required.

Then, at 93, as part of placing the call from Bob to Alice, the call-control server 30 sends the indication of the content to the instance of the side-bar gadget 74 running on the data service client 68 at Alice. The indication of the content can include all of the content itself, a portion of the content (e.g., email subject line), an identifier of the content (e.g., the local message ID for Alice, in this example), a combination of such, and the like. The specific nature of the indication of the content can be selected so as to make the party receiving the call (e.g., Alice) aware of the subject of the call. The specific nature of the indication of the content, therefore, can depend on the type of content (e.g., subject line for messages, location of selected or highlighted text for documents, subject line of selected calendar event, etc).

The side-bar gadget 74 is configured to output a notification to Alice, at 94, when receiving, at 93, indication of the content ahead of establishment of the call. The call notification can include the indication of the content, so as to alert Alice as to the subject of the incoming call. The notification can be a popup window, an HTML/CSS popup element, a browser alert, or the like. In some embodiments, the notification does not take focus from an active application, and instead is issued in the background or a new window, so that the receiving party is not disturbed or interrupted. In other embodiments, the notification can automatically take focus from an active application, if permitted by the data service client 68, so that the receiving party is quickly informed of the call context.

At 95, Alice then accepts or rejects the call by responding to the notification (e.g., by clicking the notification) accordingly. If the side-bar gadget 74 is in focus, the call may be accepted or rejected by interacting with the side-bar gadget 74 itself (e.g., by clicking the side-bar gadget 74). In any case, the side-bar gadget 74 responds to the call-control server 30 to indicate that the call is accepted or rejected, at 96. If Alice accepts the call, the data service client 68 can obtain, if not already obtained, the content identified with the call notification and bring the content into focus. For example, the data service client 68 can output the text of the email message at the side-bar gadget 72, or the side-bar gadget 72 can trigger the data service client 68 to open the identified content (e.g., open the email message via the web client).

When the call is accepted by Alice, at 97, the call-control server 30 completes placement of the call from Bob to Alice by linking any of the voice-capable communications devices 22, 24 belonging to Alice with such a device 26, 28 under the control of Bob. In one example, the call-control server 30 stores phone numbers in association with user IDs for Alice and Bob, so the call is completed via the phones 24, 28. In some embodiments, the call-control server 30 stores various different identifiers of voice-capable devices for users. Accordingly, the call may first be routed to a user's desk phone, and then, if not answered, sent to the user's computer-based VOIP client, before finally being tried at the user's mobile phone. To facilitate linking users to their communications devices, the call-control server 30 can include or have access to a database (e.g., database 59 of FIG. 3) storing relationships of such.

The notification may be configured with a timeout, so that if a call is not accepted or rejected after a threshold time, then the call-control server 30 proceeds with completing placement of the call from Bob to Alice by linking any of the voice-capable communications devices 22, 24 belonging to Alice with such a device 26, 28 under the control of Bob. The timeout causes Alice's voice-capable communications device 22, 24 to ring regardless of the state of the notification. For example, Alice may not notice the notification (e.g., she is looking away from her screen). The notification can be configured to persist after the timeout, so that Alice can still use it to learn of the context of the call, after she becomes aware of the call via the ringing at her voice-capable communications device 22, 24. The notification can be configured to persist after the call is answered. The notification may also be configured to disable a user interface element (e.g., button) that ignores or rejects the call after the call is answered at the voice-capable communications device 22, 24.

The call-control server 30 can be configured to use geo-location, session tracking, motion detection, and other presence information to determine which communications devices to use to establish the call. For example, if a user is known to be at his desk, the call-control server 30 will call the desk phone, while otherwise the call-control server 30 would call the user's mobile phone. In another example, if an accelerometer of a mobile phone detects that the mobile phone is in motion (e.g., the user is walking with the phone), the call-control server 30 will call the mobile phone first, before trying other devices.

When the call is rejected or not answered by Alice, at 97, the call-control server 30 routes the call to voicemail. The side-bar gadget 74 may store and display indications of missed, ignored, or rejected calls for future reference by Alice. Further, the call-control server 30 can be configured to then provide an indication of the missed, ignored, or rejected call to the data server 32 as new content to be appended to the content that was used to originate the call. In the example of an email, the indication of the missed, ignored, or rejected call can be included in a new email message that is generated and sent by the call-control server 30 as a response to the email message that was used to place the call. This message can be addressed to the would-be participants of the call and can include a subject line that indicates that a call was missed, ignored, or rejected (e.g., "Missed call re: Financial Statement"). Further, such message may also include the corresponding voicemail message as an attachment.

The call-control server 30 can be configured to record the call. When the call ends, at 98, the call-control server 30 can then provide the recording of the call to the data server 32 as new content to be appended to the content that was used to originate the call. In the example of an email, the call recording can be attached to a new email message that is generated and sent by the call-control server 30 as a response to the email message that was used to place the call. This message can be addressed to call participants and can include a subject line that indicates that a call took place and the subject of the call (e.g., "Call re: Financial Statement (call recording attached)"). Further, the body of this message can be provided with additional details regarding the call, such as its duration. Such a message is then appended to the email thread to add to the data context. The same applies in the example of a calendar event or task.

When the process is applied to a document, the recording of the call can be saved as a file in the same folder or directory as the document with an appropriate filename (e.g., "Recording of call of 20-Sep-2012 re Financial Statement"). Suitable metadata, such as call participants and duration, can also be saved with the file. Alternatively, if the document supports such, the call recording can be inserted directly into the document.

The above process can further apply to an email message or other content that has more than two users associated therewith. For example, an email message may have a sender and more than one receiver. In such case, at 90, Bob can be provided with an option to call one or more than one of the other users who have access to the message. Subsequent actions 91 - 98 are performed for all receiving parties of the call, in that the call-control server 30 establishes a conference call.

To facilitate placing conference calls from email messages, the contextual gadget 76 can be configured to provide the calling party with options to call: (a) the sender of the message; (b) a particular receiver or the only receiver of the message; (c) all of the direct receivers of the message (i.e., those in the "TO" field), (d) everyone who received the message (i.e., those in the "TO" and "CC" fields), or any combination of such. For other types of content, similar options can be provided.

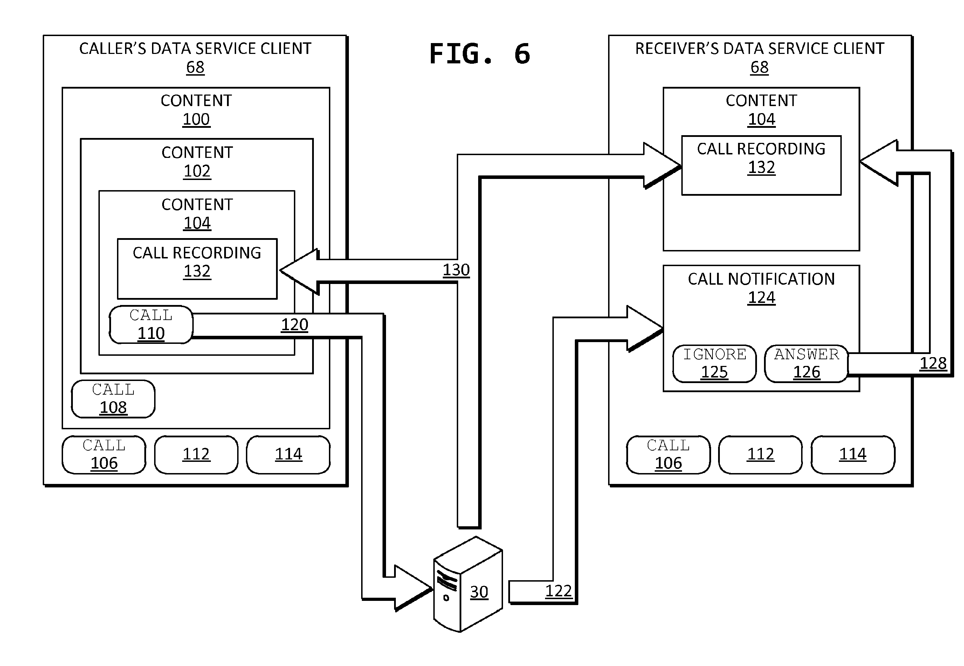

Fig. 6 shows a user interface that can be provided at data-enabled communications devices 22 - 29 for initiating and accepting contextual calls. The user interface allows for user-generated content to be displayed or otherwise output at the data service clients 68 of the calling party and the one or more receiving parties to facilitate collaboration and effective communication.

User-generated content may be of many different kinds and may further be of a mixture of different kinds. General user-generated content is indicated at 104, which can represent a single message, a calendar event, a task, a document being edited/viewed, a voice recording or voicemail message, and similar. Content of this kind can be chronological, in that edits, modifications, or responses can be made over time, even if only the most recent content is display.

When the user-generated content is hierarchical, further content elements may be present, such as those indicated at 100, 102. Messaging, particularly email messaging, is amenable to hierarchical structure, as are certain kinds of document (e.g., a large document divided into sections and subsections, an HTML or XML document, etc.). As such, the data service client can be configured to arrange such content according to its hierarchical structure. In the illustrative example of an email thread with reference to the caller's data service client 68, content 100 represents the entire thread of messages, content 102 represents a most recently sent message, and content 104 represents a message sent in response to the most recently received message 102. Content of this kind is also chronological, and the exhibited hierarchy may reflect the chronology, as in the case of an email thread.

The user interface is configured to display one or more call buttons, links, or similar user interface elements 106 - 110, as presently displayed on the caller's data service client 68. The call buttons 106 - 110 perform functions based on their context. Specifically, the call button 106 can be configured to initiate a call based on a state of the data service client 68, such as a message thread currently selected from a list of message threads or a caller-specified receiver (i.e., via input of a phone number or user ID to call). The call button 108 can be configured to initiate a call based on the parties associated with the content 100 (e.g., senders/recipients in the entire email thread). Similarly, the call button 110 can be configured to initiate a call based on the parties associated with the content 104 (e.g., senders/recipients in the most recently received message). The call buttons 106 - 110 can be provided in gadgets or other embedded software, as discussed elsewhere herein, or can be provided as core functionality of the data service client 68.

The user interface can be further configured to display one or more additional buttons, links, or similar user interface elements 112 - 114, such as buttons for closing, saving, cancelling, and other functions.

The user interface is configured to initiate a call from the calling party to one or more receiving parties when the one of the call buttons 106 - 110 is pressed. For example, when the call button 110 is pressed, at 120, the call-control server 30 is provided with the identification of the calling party and the content 104. The call-control server 30 may further be provided with the identification of the receiving party or parties, or may obtain such identification from another source (e.g., data server 32) using the indication of the content 104.

Then, at 122, the call-control server 30 provides to the data service client 68 of each receiving party a call notification 124 that may include an indication of the content, such as a portion of the content 104 (e.g., email subject line) or the entire content 104 itself, as configured. The call notification 124 prompts for user confirmation to display the current content 104 of the data context for reference during the call.

The call notification 124 includes one or more call buttons, links, or similar user interface elements 125, 126 for the receiving party to accept or reject the call. An ignore button 125, in this example, is configured to reject the call and direct the call to voicemail.

An answer button 126 triggers display or output of the content 104 indicated by the indication received at 122. This can include display of the indication, which can be a portion of or the entire content 104, or the indication can trigger the receiver's data service client 68 to obtain the content 104 indicated by the received indication, which may include the receiver's data service client 68 obtaining the content from the data server 32.

This advantageously allows the receiver to judge whether the call needs to be answered and, if answered, allows the receiver to immediately become aware of the full data context of the conversation.

After the call is complete, at 130, the call-control server 30, which can be configured to record calls, can cause the recording 132 of the call to be stored in association with the content 104. In some embodiments, the call control-server 30 sends the call recording 132 to the data server 130 with instructions or other information that associates the call recording 132 with the content 104. In the example of email, the call-control server 30 replies to the email message 104 with a message that attaches the call recording 132. The recording of the call is thus added to the data context as the most current user-generated content, advantageously allowing the calling and receiving parties to easily access all content related to the subject of the call.

Once the call is ended, the data service clients 68 and/or call-control server 32 can prompt the users to close any data context or windows that were brought in focus by the call.

The process of FIG. 5 and system and devices of FIGS. 1 - 4 can be referenced for further details of the above description of FIG. 6.

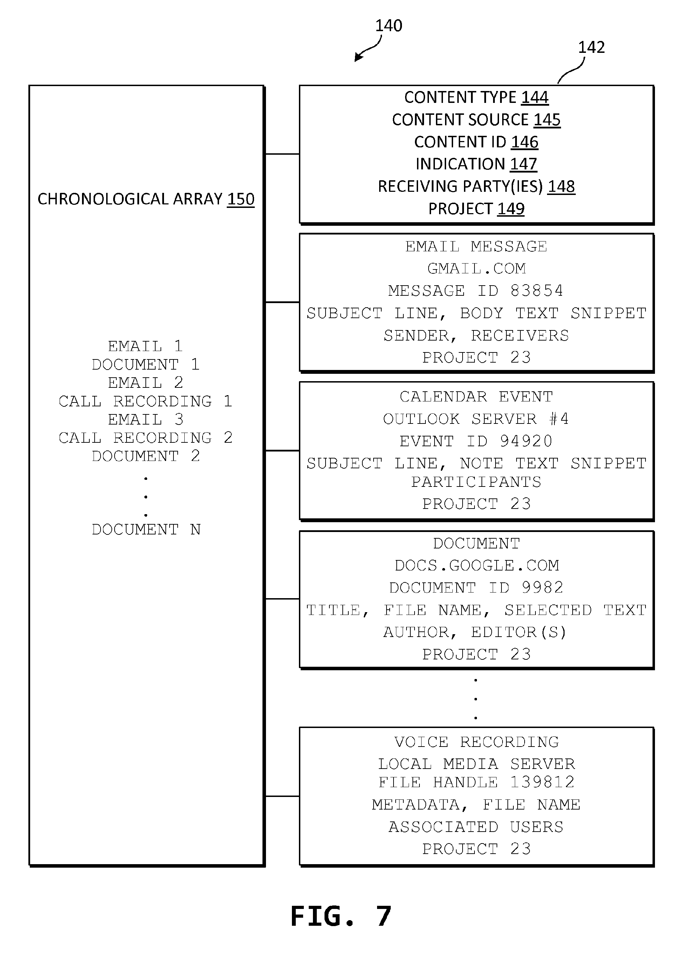

FIG. 7 illustrates a data structure 140 that can be used to establish a centralized view of a data context of user-generated visual or audio content from disparate content services, irrespective of medium. Using the data structure, any or all activity from the above-mentioned types of content (e.g., email, documents, etc) can be displayed to calling or receiving parties for the purposes of establishing call context. Additionally, any content generated during the call can be appended.

A data set 142 defines data elements for content type 144, content source 145, content ID 146, call notification indication format 146, types of receiving parties 148 for the call, and project 149. Instances of the data element (examples shown in the figure) can thus be used to identify particular elements of content.

The content type data element 144 can be a string (e.g., "email message") or integer that identifies the type of content as email message, calendar event, document, voice/call recording, among other examples discussed herein. The content source data element 145 can be a string (e.g., "gmail.com") that identifies the host service (e.g., server 32) for such content, and can take the form of a URL, host network address (e.g., IP address), or hostname. The content ID data element 146 can be an integer (e.g., message "83854"), hash, or other unique identifier of the content at the content source. The call notification indication format data element 146 can be an array of integers or strings (e.g., "subject line, body text snippet") that identifies one or more suitable indications of the content, from which to select when providing a call notification. The type of receiving parties data element 148 can be an array of integers or strings (e.g., "sender, receivers") that identifies one or more suitable potential call receiving parties, from which to select when initiating a call. The project data element 149 can be an integer (e.g., project "23") that identifies a particular collaborative project (i.e., data context) to which the content belongs.

The data structure 140 and instantiated data sets 142 can be maintained at, for example, the call-control server 30 or server in communication with the call-control server 30. The data structure 140 can be stored in a database.

Temporal information inherent to the instantiated data sets 142 can be referenced to generate a chronological array 150 of content that is maintained for a particular collaborative project. Temporal information can include, for example, the timestamp of an email message, a last modified date of a document or file, and the like. Temporal metadata can be stored in association with the content if the type of content does not inherently include time information. The chronological array 150 can be organized by content time (e.g., "email 1, document 1, email 2, call recording i...") or can be a two-dimensional array that associates instantiated data sets 142 with times.

The chronological array 150 thus indentifies a chronological series of disparate content for a particular project, and can be used to generate a view of the project. For example, the chronological array 150 can be referenced by a program 68 (FIG. 4) of a data communication device 22 - 29 configured to obtain and display content identified by the data sets 142 identified by the chronological array 150, so that when a call is answered, the project history is displayed to the receiving party.

Thus, any content generated before, after, or during a call can be associated with a project and displayed at a later time to inform calling and receiving parties as to the current state of the project, including the most current content. Further, call recordings can be chronologically appended to the project, so that even users not party to the call can stay abreast of the state of the project.

In another exemplary embodiment, with reference to FIGS. 1 - 7, instant message chat sessions can be used rather than voice calls. That is, aspects of the invention also apply to text-based chats. The server 30 is thus an instant messaging server rather than a voice call-control server, the calling party can be referred to as an initiating party, the communications devices 22 - 29 need only be configured for data communications, and call recordings take the form of server-based chat logs. In this exemplary embodiment, substantially all other aspects of the invention are the same as previously described for voice calls. Substantially the same advantages are also realized.

Thus, as can be understood from the above, aspects of the present invention advantageously tie in a data context of a communication or project to call establishment, in an intelligent manner. This can be done without additional actions on the part of the calling party. Further, calling parties now have the ability to send the most-current (or more) content of a data context when placing calls so as to assist in informing receiving parties as to the nature of the call. This can be done in a non-intrusive and secure manner by way of, for example, gadgets or similar entities. In addition, call recordings can be easily added to the data context for future reference, as can voicemail, missed call indications, and ignored/rejected call indications, so as to provide a "paper trail" for non-visual content.

While the forgoing examples are illustrative of the principles of various aspects of the present invention in one or more particular applications, it will be apparent to those of ordinary skill in the art that numerous modifications in form, usage and details of implementation can be made without the exercise of inventive faculty, and without departing from the principles and concepts of the invention. Aspects of the invention can be further expanded to allow live collaborative interaction on the content that was presented as part of the call set up. For example, after the caller activates the call request from a highlighted section of a document, the called party, not only sees the highlighted text as part of call answer but also has the capability to work (i.e., modify and change) on that highlighted text provided the caller allows a proper privilege to that called party. Aspects of the invention are not restricted to just sharing of multimedia but potentially can be used to aggregate information for social networking sites. Accordingly, it is not intended that the invention be limited, except as by the claims set forth below.

## Claims

1. A communication system for contextual voice communication, the system comprising:
a plurality of communication devices; and
one or more servers configured to provide data communication among the plurality of communication devices, the data communication providing for establishment and maintenance of data contexts between different communication devices, the data contexts each providing for storage of chronological user-generated content;
the one or more servers configured to control voice telephony communication among the plurality of communication devices; and
at least one of the servers configured to send an indication of current user-generated content of a data context associated with a receiving party and a calling party to a communication device associated with the receiving party in response to an initiation of a call at a communication device associated with the calling party.

2. The system of claim 1, wherein the communication device associated with the receiving party is configured to output the current user-generated content.

3. The system of claim 1 or 2, wherein the server is configured to send the indication of current user-generated content of the data context directly in response to initiation of the call without further action by the calling party.

4. The system of any preceding claim, wherein:
the plurality of communication devices comprises voice communication devices and data communication devices;
the communication device associated with the calling party is a voice communication device; and
the communication device associated with the receiving party is a data communication device.

5. The system of any preceding claim, wherein the server is configured to send the indication of current user-generated content of the data context from a data communication device associated with the calling party to the data communication device associated with the receiving party, the data communication device associated with the calling party being different from the voice communication device associated with the calling party;
the system optionally further comprising a voice communication device associated with the receiving party to which the call is placed, the voice communication device associated with the receiving party being different from the data communication device associated with the receiving party.

6. The system of any preceding claim, wherein the plurality of communication devices comprises communication devices each configured for both voice and data communications.

7. The system of any preceding claim, wherein the one or more servers comprise:
one or more data servers configured to establish and maintain data contexts; and
one or more call-control servers configured to send the indications of current user-generated content of the data contexts in response to initiations of calls.

8. The system of any preceding claim, wherein the indication of current user-generated content of the data context comprises the current user-generated content.

9. The system of any preceding claim, wherein the data context comprises user-generated content from a plurality of disparate content services.

10. The system of any preceding claim, wherein the server is configured to send the indication of current user-generated content of the data context associated with a plurality of receiving parties and the calling party to communication devices associated with the receiving parties in response to initiation of the call, and wherein the call is a conference call.

11. The system of any preceding claim, wherein the data context comprises user-generated visual content; and
optionally wherein the current user-generated content of the data context comprises at least the most current message of a message thread; or
optionally wherein the current user-generated content of the data context comprises a most current version of a document.

12. The system of any of claims 1 to 10, wherein the data context comprises user-generated audio content;
optionally wherein the current user-generated content of the data context comprises a recording of a previous call.

13. The system of any preceding claim, wherein the server is configured to add a recording of the call to the data context as a subsequent most current user-generated content.

14. A method for a contextual communication session, the method comprising:
receiving initiation of a communication session from an initiating party to at least one receiving party, the initiating party and the at least one receiving party sharing a chronological data context;
in response to initiation of the communication session, obtaining a most current user-generated content of the data context;
sending an indication of the most current user-generated content to the at least one receiving party; and
establishing the communication session when receiving an acceptance from the at least one receiving party in response to the indication of the most current user-generated content.

15. The method of claim 14, wherein the communication session is a voice telephony call;
the method optionally further comprising recording the call and when the call is completed, adding the recording of the call to the data context as a subsequent most current user-generated content.
